# EUROPÄISCHE PATENTSCHRIFT

(11) **EP 1 460 411 B1**
(45) Veröffentlichungstag und Bekanntmachung des Hinweises auf die Patenterteilung: **22.03.2006**
(21) Anmeldenummer: 03027191.0
(22) Anmeldetag: 27.11.2003
(51) Int. Cl.: G01N 19/02, B60T 8/00

(54) **Prüfeinrichtung für Brems- und Kupplungsbeläge**
Testing device for friction linings for brakes and clutches
Dispositif d'essai pour garnitures de friction pour freins et embrayages

(30) Priorität: 03.03.2003 DE 10309192
(43) Veröffentlichungstag der Anmeldung: 22.09.2004
(73) Patentinhaber: TMD Friction Services GmbH, 51381 Leverkusen (DE)
(72) Erfinder: Hogenkamp, Wolfgang, 42855 Remscheid (DE)
(74) Vertreter: Zenz, Joachim Klaus

(56) Entgegenhaltungen:
- DATABASE WPI Section EI, Week 198501 Derwent Publications Ltd., London, GB; Class S03, AN 1985-005305 XP002295725 -& SU 1 092 386 A (SARAT POLY), 15. Mai 1984 (1984-05-15)
- DATABASE WPI Section EI, Week 198349 Derwent Publications Ltd., London, GB; Class S03, AN 1983-838239 XP002295726 -& SU 998 924 A (NOVCH POLY), 23. Februar 1983 (1983-02-23)
- DAVENPORT: "Friction Tester - Co-efficient of Friction Measurement" PRODUCT SPECIFICATION, [Online] April 2001 (2001-04), XP002295724 Gefunden im Internet: <URL:www.davenport-instruments.co.uk/ products/Friction_tester/Friction_tester.h tml > [gefunden am 2004-09-10]

## Beschreibung

Die Erfindung betrifft eine Prüfeinrichtung für Brems-und Kupplungsbeläge, die einen Reibbelag aufweisen, der vorzugsweise auf einer Trägerplatte angeordnet ist, ggf. unter Zwischenschaltung einer Zwischenschicht.

Brems- und Kupplungsbeläge bestehen in der Regel aus der Trägerplatte und dem Reibbelag. Die unter Umständen zwischengeschaltete Zwischenschicht dient dazu, die Haftung zwischen dem Reibbelag und der Trägerplatte zu verbessern. Im Gespräch sind allerdings auch bereits Brems- und Kupplungsbeläge, die lediglich aus dem Reibbelag bestehen.

Die Reibbeläge werden in der Regel aus harzgebundenen Schüttmassen hergestellt. Die Ausformung der Schüttmassen erfolgt in einer Preßform, wobei gleichzeitig die Verbindung zur Trägerplatte hergestellt werden kann. Anschließend werden die Reibbeläge gehärtet, und zwar unter Einwirkung von Druck und Temperatur. Bei einer Temperatur von ca. 230°C vernetzen die üblicherweise als Bindemittel eingesetzten Phenolharze und bilden Phenolharzbrücken. Die Reibbeläge erhalten dabei ihre Endfestigkeit.

Nach dem Härten erfolgt das Flachschleifen, wobei der Reibbelag seine vorgegebene Dicke erhält. Hieran schließt sich das Scorchen an. Dabei wird die Reibfläche einer Wärmebehandlung bei Temperaturen von 450°C bis 750°C unterworfen, um bereits beim ersten Einsatz den vorgegebenen Reibwert erzielen zu können. Es folgen weitere Verfahrensschritte, etwa Spezialschleifen zum Erzeugen einer vorgegebenen Konturierung (Nuten, abgeschrägte Kanten), Anpassen der Temperatur und Erzeugen eines Korrosionsschutzes, beispielsweise durch Aufbringen von Pulverlack.

Die fertigen Brems- und Kupplungsbeläge werden einer Endkontrolle unterworfen, um etwaigen Ausschuß aussondern zu können. Die Endkontrolle liefert direkte Aussagen vor allen Dingen über die Einhaltung von Abmaßtoleranzen. Zur Erlangung weiterer Informationen beispielsweise über die Reibwerkstoffe sind chemische und physikalische Methoden anzuwenden. Sie liefern erst nach einer zeitintensiven und teilweise aufwendigen Analyse Ergebnisse. Im Zweifel kann bis zur Vorlage der Ergebnisse nicht produziert werden, sofern man nicht einen hohen Anteil an Ausschuß in Kauf nehmen will. Das Auftreten von Ausschuß liefert auch gewisse Informationen für die Prozeßsteuerung. Allerdings fehlt es bisher an einer Möglichkeit, die korrekte Durchführung der einzelnen Verfahrensschritte gesondert zu überprüfen und die ermittelten Informationen direkt in die Prozeßsteuerung einfließen zu lassen, um diese zu optimieren, und zwar mit dem Ziel, Produkte höchster Qualität mit einem Minimum an Ausschuß produzieren zu können. Aus Dokument SU 1 092 386 ist eine Vorrichtung bekannt, die die Reibeigenschaften eines Materials mittels einer schiefen Ebene erfasst. Diese Vorrichtung ist jedoch nur zur Prüfung von Reibeigenschaften geeignet und liefert keine Information über weitere Merkmale des Prüflings. Der Erfindung liegt die Aufgabe zugrunde, diesen Mangel zu beseitigen.

Zur Lösung dieser Aufgabe schafft die Erfindung eine Prüfeinrichtung für Brems- und Kupplungsbeläge, die einen Reibbelag aufweisen, der vorzugsweise auf einer Trägerplatte angeordnet ist, ggf. unter Zwischenschaltung einer Zwischenschicht, mit
- einem für den Durchgang der Prüflinge vorgesehenen Meßkanal, der gegenüber der Horizontalen geneigt ist und mindestens eine Seitenwand sowie einen Boden aufweist, wobei die vorzugsweise plan ausgebildete Seitenwand gegenüber der Vertikalen geneigt ist,
- einer dem Meßkanal zugeordneten Sensoreinrichtung, die auf mindestens einen der folgenden Meßwerte des jeweiligen Prüflings anspricht:
   - Reibwert
   - Geometrie
   - Reibmaterial
   - Masse
   - Temperatur
- einer Datenverarbeitungseinrichtung, die die von der Sensoreinrichtung gelieferten Daten verarbeitet und mit vorgegebenen Sollwerten vergleicht.

Die erfindungsgemäße Prüfeinrichtung ist universell anwendbar und kann vor und nach jeder Verfahrensstufe zum Einsatz gebracht werden. Sie liefert diejenigen Meßwerte, die für die korrekte Überwachung des jeweiligen Verfahrensschrittes erforderlich sind. Auftretende Fehlfunktionen werden also direkt vor Ort erkannt und können sofort in die Prozeßsteuerung einfließen und diese entsprechend optimieren.

Die erfindungsgemäße Vorrichtung eignet sich für geschlossene Produktionsprozesse, deren temperaturgesteuerte Verfahrensschritte sehr schnell ablaufen, da ein unmittelbarer Eingriff in das Produktionsgeschehen ermöglicht wird.

Hervorzuheben ist ferner der einfache Aufbau der erfindungsgemäßen Vorrichtung. Die Prüflinge werden in den Meßkanal eingebracht, wobei sie eine definierte und stabile Dreipunktlage einnehmen. Mit ihrem Unterbogen stützen sie sich auf dem Boden ab, und mit ihrer Reibfläche liegen sie ganzflächig auf der gegenüber der Vertikalen geneigten Seitenwand auf. In dieser Position rutschen sie den geneigten Meßkanal hinunter und stellen sich den erforderlichen Messungen zur Verfügung.

Der Meßkanal sollte um einen Winkel von ca. 20° gegen die Horizontale geneigt sein, wobei dieser Neigungswinkel einstellbar sein sollte. Für die eine Seitenwand des Meßkanals hat sich ein Neigungswinkel gegenüber der Vertikalen von ca. 60° als positiv erwiesen. Die Prüflinge können manuell oder von einer Handhabungseinrichtung korrekt ausgerichtet und in den Meßkanal eingelegt werden. Alternativ wird vorgeschlagen, daß der Meßkanal eine Vorlaufstrecke aufweist, die die Reibfläche des jeweiligen Prüflings auf die gegen die Vertikale geneigte Seitenwand des Meßkanals überleitet. Dies bedeutet, daß die Prüflinge in horizontaler Lage in die Vorlaufstrecke eingebracht werden können, woraufhin sie dann unter der wirkung ihres Eigengewichts in die Meßlage gekippt werden.

In Weiterbildung der Erfindung wird vorgeschlagen, daß der Meßkanal mindestens zwei in Kanalrichtung im Abstand zueinander angeordnete Lichtschranken zur Erfassung der Rutschzeit und damit der Rutschgeschwindigkeit des jeweiligen Prüflings aufweist. Da der Prüfling in seiner DreipunktAuflage mit seiner Reibfläche ganzflächig auf der gegen die Vertikale geneigten Seitenwand des Meßkanals aufliegt und in dieser Position während seines Durchlaufs durch den Meßkanal verbleibt, hängt die Rutschgeschwindigkeit, d.h. die Zeit zwischen dem Passieren der beiden Lichtschranken direkt vom Reibwert des jeweiligen Reibbelags ab. Allerdings muß die Einlaufgeschwindigkeit, d.h. die Geschwindigkeit, mit der der Prüfling die stromauf gelegene Lichtschranke der Meßstrecke passiert, definiert sein. Die Zulaufgeschwindigkeit des Prüflings kann Null sein, d.h. der Prüfling wird auf den Meßkanal aufgesetzt und beginnt dort zu rutschen. Sofern die Zulaufgeschwindigkeit des Prüflings nicht bekannt ist, muß sie gemessen werden, wozu dann eine weiter stromauf liegende Lichtschranke erforderlich ist. Allerdings besteht auch die unter Umständen bevorzugte Möglichkeit, eine sich über mindestens einen Längenabschnitt des Meßkanals erstreckende Kette von Lichtschranken vorzusehen. Auf diese Weise erfolgt eine kontinuierliche Erfassung der Geschwindigkeit über der Länge der Meßstrecke.

Der Begriff "Lichtschranke" ist im Zusammenhang mit der vorliegenden Erfindung weit auszulegen. Er soll neben Dioden- und Lasersystemen sämtliche zur Abschrankung geeigneten Systeme umfassen, beispielsweise auch Infrarot- und Reflexionssysteme.

In weiterbildung der Erfindung wird vorgeschlagen, daß mindestens eine sich vom Boden des Meßkanals aus über mindestens einen Höhenabschnitt von dessen Seitenwänden erstreckende Reihe von Lichtschranken vorgesehen ist, wobei diese Lichtschranken in einem engen Raster angeordnet sind. Jedes Lichtschrankensegment wird in Abhängigkeit von der Geometrie und der Geschwindigkeit des jeweiligen Prüflings unterschiedlich bedämpft. Das Muster der Bedämpfung wird mit dem vorgegebenen Sollwert-Muster verglichen und gibt Auskunft über die Grundgeometrie, den ggf. aufgetretenen Austrieb und die Funktionsmaße des Prüflings.

In diesem Zusammenhang ist es besonders vorteilhaft, wenn der Boden des Meßkanals mit dessen gegen die Vertikale geneigten Seitenwand einen spitzen Winkel bildet. Dies ermöglicht zusätzlich eine Grundaussage über die Dicke des Prüflings. Je nach Dicke verändert sich die Höhe, in der der Prüfling durch die Lichtschrankenreihe rutscht, wodurch abweichende Signale erzeugt werden.

Bei Verwendung spezieller Lichtschrankensysteme, die beispielsweise nach dem Reflexionsverfahren arbeiten, kann die Dicke des Prüflings exakt gemessen werden, so daß eine Redundanz erzielbar ist. Zusätzlich erfaßt werden:
- Pins der Belagträgerplatte (Vorhandensein, Durchmesser, Position, Höhe),
- Planparallelität des Prüflings,
- Konkavität, Konvexität der Belagträgerplatte,
- Schrägung der Belagträgerplatte.

In jedem Falle ist es vorteilhaft, die Elemente der Lichtschranken lagegeschützt anzuordnen.

In wesentlicher Weiterbildung der Erfindung wird vorgeschlagen, daß in die gegen die Vertikale geneigte Seitenwand des Meßkanals mindestens eine Spule eines zugehörigen Schwingkreises integriert ist. Aufgrund seiner exakten Lageorientierung wird der Prüfling reibseitig in definiertem Abstand über die Spule geführt, wobei das Reibmaterial die induktiven Eigenschaften der Spule beeinflußt und damit die Resonanzfrequenz des Schwingkreises ändert. Diese Frequenzänderung läßt sich ohne weiteres erfassen und gibt Auskunft über die Art des Reibbelags.

Je nach geforderter Genauigkeit und Auflösung der Prüfung, kann mit einer einzigen, relativ großen Spule gearbeitet werden. Auch können die Signale mehrerer kleiner Spülen elektronisch integriert werden. In beiden Fällen läßt sich das Reibmaterial eindeutig identifizieren. Die kleineren Spulen können in einer Reihe angeordnet sein, die beispielsweise rechtwinklig zum Boden des Meßkanals verläuft. Auch ist eine versetzte Anordnung in der zugehörigen Seitenwand des Meßkanals möglich.

Je nach Auflösungsvermögen der installierten Schwingkreise kann die individuelle Mischungsverteilung über der Reibfläche erfaßt werden. Diese in der Regel von Prüfling zu Prüfling unterschiedliche Verteilung kann als "Fingerabdruck" des Brems- und Kupplungsbelags zur Produktverfolgung verwendet werden. Andere individuelle Kennzeichnungen werden damit unter Umständen überflüssig.

Neben den materialspezifischen Kennwerten liefern die Schwingkreise auch Informationen über die geometrischen Verhältnisse der Reibfläche. So reagieren die Schwingkreise auch auf Belagschrägen, Nutungen im Reibmaterial und Unebenheiten der Reibfläche, z.B. Blasen nach dem Schleifen. Im Zusammenhang mit der Geschwindigkeitsinformation ist auch die Lage von Nuten, Schrägen etc. eindeutig zu orten. Auf diese Weise läßt sich der Erfolg von die Geometrie beeinflussenden Bearbeitungsschritten überprüfen.

Ein weiteres bevorzugtes Merkmal besteht darin, daß der Meßkanal in eine Umlenkfläche übergeht und daß an der Übergangsstelle ein Sensor zum Erfassen des Aufprallimpulses vorgesehen ist. Dies ermöglicht die Bestimmung der Masse des jeweiligen Prüflings. Anstelle der Umlenkfläche kann auch eine Prallfläche verwendet werden, an der der Prüfling zum Stillstand kommt.

Mit der Massebestimmung kann bereits bei der Belagträgerplatte begonnen werden. Ihr vorgegebenes Gewicht resultiert aus Material, Geometrie und Bearbeitungszustand. Das Gewicht des Grünlings setzt sich zusammen aus dem Gewicht der Belagträgerplatte und dem der Reibmaterialeinwaage, ggf. zuzüglich des Gewichts des Zwischenschichtmaterials. Nach dem Flachschleifen vermindert sich das Gewicht des gehärteten Brems- oder Kupplungsbelags um den Schleifverlust und dann nochmals um das Gewicht des Schleifverlusts beim Spezialschleifen. Auch beim Scorchen tritt ein eindeutiger Gewichtsverlust durch die abgeführten Gase auf.

Die genannten Bearbeitungsvorgänge haben also eindeutige Gewichtsänderungen zur Folge, die meßbar sind und als Indikator für eine erfolgreiche Durchführung des jeweiligen Bearbeitungsschritts dienen können.

Treten Gewichtsänderungen durch Zubehörmontagen auf, so sind auch diese eindeutig erfaßbar.

Bei der Umlenkfläche handelt es sich in aller Regel um den Übergang des Meßkanals in die Horizontale. Allerdings sind auch seitliche Ablenkflächen denkbar. In jedem Fall erfolgt die Gewichtserfassung über die kinetische Energie, die der Prüfling durch die Höhenänderung im Meßkanal erfährt. Der Aufprallimpuls kann durch Erschütterungssensoren oder Beschleunigungssensoren, die beispielsweise piezoelektrisch oder induktiv arbeiten, oder auch durch Körperschallmikrophone erfaßt werden.

Eine quantitative Gewichtserfassung ist auf diese Weise nicht möglich, sondern lediglich eine Erfassung von Abweichungen von einem vorgegebenen Sollwert. Gegenüber einer Wägung hat die Impulserfassung den Vorteil, daß sie sehr schnell und auch in rauher Maschinenumgebung erfolgen kann. Rechnerisch können auch Impulsbilder (z.B. vor dem Schleifen/ nach dem Schleifen) verglichen werden.

Vorteilhafterweise ist in die gegen die Vertikale geneigte Seitenwand des Meßkanals ein Temperatursensor integriert.

Diesem Merkmal liegt die Erkenntnis zugrunde, daß bei temperaturgeführten Prozessen, die sich im Gleichgewichtszustand befinden, den einzelnen Verfahrens- bzw. Fertigungsschritten bestimmte Temperaturen zuzuordnen sind. Ändern sich diese Temperaturen unabhängig von den sonstigen Verfahrensbedingungen, so ist dies ein Indiz dafür, daß Fehler in der Verfahrensführung aufgetreten sind.

Der Temperatursensor wird bündig in die Seitenwand des Meßkanals eingebaut und erfaßt folglich die Temperatur auf der Reibfläche.

Diesem Temperatursensor wird vorteilhafterweise ein Außentemperatursensor zugeordnet, um Änderungen der Umgebungsbedingungen erfassen zu können.

In Weiterbildung der Erfindung wird vorgeschlagen, daß die Sensoreinrichtung nachrüstbar ausgebildet ist. Sie kann auf diese Weise mit einer zusätzlichen Flammenüberwachung oder einem zusätzlichen Rauchmelder bestückt werden. Auch ist die Zuordnung von Lagesensoren möglich.

Die erfindungsgemäße Prüfeinrichtung kann als Tischgerät ausgebildet sein, in das die Prüflinge, wie bereits erwähnt, manuell eingegeben werden. Vorteilhafter hingegen kann es sein, die Prüfeinrichtung in eine Produktionsanlage zu integrieren, und zwar dort zwischen aufeinanderfolgenden Bearbeitungsstationen. Hierzu wird vorgeschlagen, die Prüfeinrichtung eintritts- und austrittsseitig mit Standard-Schnittstellen auszurüsten. Dies ermöglicht einen problemlosen Austausch sowie die Anordnung einer Mehrzahl von Prüfeinrichtungen über der Länge der Produktionsanlage. Werden dort die einzelnen Verfahrensschritte in zugeordneten Modulen durchgeführt, so kann je eine der erfindungsgemäßen Prüfeinrichtungen zwischen benachbarten Modulen angeordnet werden. Auch lassen sich die Prüfeinrichtungen paarweise anordnen, nämlich austrittsseitig des stromauf gelegenen Moduls und eintrittsseitig des stromab gelegenen Moduls. Dies ermöglicht redundante Messungen sowie eine gegenseitige Überprüfung der Meßsysteme.

Vor Inbetriebnahme der Prüfeinrichtung wird die zugehörige Datenverarbeitungseinrichtung einem "Lernmodus" unterworfen. Dabei werden der Prüfeinrichtung Brems- und Kupplungsbeläge zugeführt, deren Eigenschaften als korrekt nachgewiesen worden sind. Die Prüfeinrichtung vermißt diese Beläge, und die Datenverarbeitungseinrichtung nimmt die ermittelten Daten auf und speichert sie als Sollwerte ab. Der Einfluß von Produktstreuungen kann durch eine entsprechende Reihe von "eingelernten Gutteilen" berücksichtigt werden. Die Datenverarbeitungseinrichtung speichert dabei die Grenzwerte. Zusätzlich können Einzelparameter manuell eingegeben werden, um enger oder breiter tolerierte Fehlermerkmale zu berücksichtigen. Die abgespeicherten Datensätze können den jeweiligen Artikeln zugeordnet werden.

Die Datenverarbeitungseinrichtung ist so konzipiert, daß sie logische Verknüpfungen zwischen einzelnen Meßwerten herstellen kann.

Zeigen beispielsweise die Daten für das Reibmaterial eine Abweichung, so können diese mit den Daten der Rutschgeschwindigkeit, des Aufprallimpulses und des Bearbeitungszustands (Dicke, Kontur, Sonderschliff) verglichen werden. Zeigt die Korrelation aller dieser Daten in eine gemeinsame Richtung, können eindeutige Schlüsse gezogen werden, beispielsweise "Reibmaterial mit Zwischenschicht vertauscht".

Treten andererseits Abweichungen bezüglich des Aufprallimpulses auf, so kann ein Vergleich mit den Daten der Geometrie, des Reibmaterials und der Rutschgeschwindigkeit erfolgen. Weitere Eigenschaftszusammenhänge liegen vor zwischen der Geometrie und der Masse, ferner zwischen der Temperatur, dem Reibmaterial, der Masse und dem Reibwert.

Die Datenverarbeitungseinrichtung überprüft diese Zusammenhänge und läßt aus der Verknüpfung der "unscharfen Daten" ein einheitliches, zuverlässiges Bild entstehen.

Stellt die Datenverarbeitungseinrichtung fest, daß sich aus den einzelnen Daten, obwohl diese innerhalb ihrer Toleranzbereiche liegen, ein eindeutiger Trend abzeichnet, so lassen sich hieraus Maßnahmen zur Gegensteuerung ableiten. Nehmen beispielsweise Dicke und Gewicht zu, muß die Schleifmaschine nachgestellt werden.

Die Datenverarbeitungseinrichtung kann eigenständig unterschiedliche Belagarten feststellen. Daher ist es auch möglich, Beläge unterschiedlicher Art und Kontur in beliebiger Reihenfolge zu prüfen. Die Konstruktion der Prüfeinrichtung gestattet es, unterschiedliche Belagarten ohne mechanische Umrüstung aufzunehmen. Sie kann damit auch zu Sortier-und Selektionsaufgaben verwendet werden. Sie arbeitet vorzugsweise mit einer Fuzzylogik.

Die Erfindung wird im folgenden anhand eines bevorzugten Ausführungsbeispiels im Zusammenhang mit der beiliegenden Zeichnung näher erläutert. Die Zeichnung zeigt in:
Figur 1 eine zum Teil aufgebrochene Seitenansicht einer erfindungsgemäßen Prüfeinrichtung;
Figur 2 einen Grundriß der Prüfeinrichtung nach Figur 1;
Figur 3 eine zum Teil aufgebrochene Stirnansicht der Prüfeinrichtung nach Figur 1;
Figur 4 einen Schnitt entlang der Linie IV-IV in Figur 1.

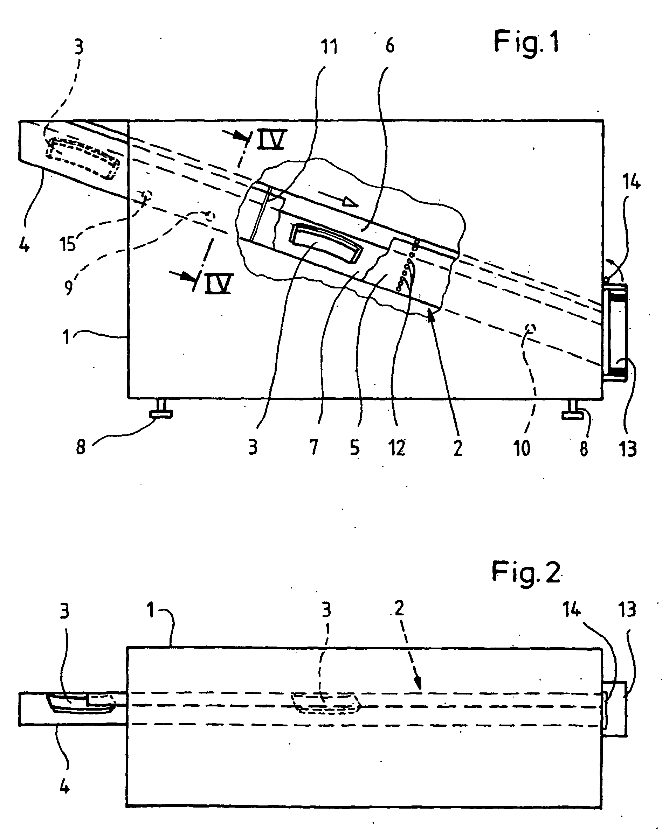

Die Prüfeinrichtung gemäß Figur 1 weist ein Gehäuse 1 auf, welches einen Meßkanal 2 enthält. Der Meßkanal 2 ist gegenüber der Horizontalen geneigt, so daß Prüflinge 3 durch den Meßkanal hindurch nach unten rutschen können. Die Prüflinge 3, bei denen es sich im vorliegenden Fall um Bremsbeläge handelt, werden dem Meßkanal 2 über eine Einlaßeinrichtung 4 zugeführt, und zwar in korrekter Orientierung und mit definierter Zulaufgeschwindigkeit, wobei letztere ggf. Null sein kann.

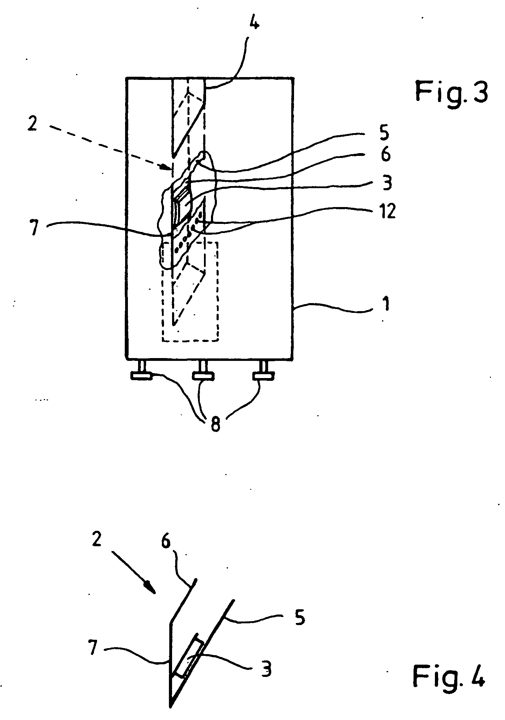

Gemäß Figur 4 weist der Zulaufkanal 2 zwei plane, parallele Seitenwände 5 und 6 sowie einen Boden 7 auf. Die Seitenwände 5 und 6 sind gegenüber der Vertikalen geneigt, und zwar im vorliegenden Fall um ca. 60°. Der Boden 7 bildet mit der Seitenwand 5 einen spitzen Winkel.

Die Konfiguration ist so getroffen, daß die Prüflinge 3 während ihres Durchgangs durch den Meßkanal 2 mit ihrer Reibfläche auf der Seitenwand 5 entlangrutschen, während sie sich mit dem Unterbogen ihrer Belagträgerplatte auf dem Boden 7 abstützen. Es ergibt sich also eine Dreipunktabstützung, die den Prüflingen 3 eine definierte, stabile Position garantiert. Der hier gewählte Neigungswinkel gegenüber der Vertikalen von ca. 60° stellt lediglich ein Beispiel dar. Anderen Neigungswinkel sind denkbar.

Gleiches gilt für den Neigungswinkel des Meßkanals 2 gegenüber der Horizontalen. Er beträgt im vorliegenden Fall ca. 20°. Wichtig ist allerdings, daß der gewählte Neigungswinkel definiert eingehalten wird. Hierfür sorgen verstellbare Füße 8 des Gehäuses 1. Eine unkorrekte Ausrichtung beeinträchtigt die Meßgenauigkeit.

Wie erwähnt, treten die Prüflinge 3 mit definierter Zulaufgeschwindigkeit in den Meßkanal 2 ein. Der Meßkanal 2 weist eine stromauf gelegene Lichtschranke 9 und eine stromab gelegene Lichtschranke 10 auf, die eine Meßstrecke definierter Länge bilden. Durch Erfassung der Zeit, die die Prüflinge 3 für den Durchgang durch diese Meßstrecke benötigen, lassen sich Rückschlüsse auf den Reibwert der jeweiligen Reibfläche ziehen. Die Meßwerte werden in eine nicht dargestellte Datenverarbeitungseinrichtung eingegeben und dort mit einem Sollwert verglichen.

Der Meßkanal 2 enthält ferner eine Kette 11 von Lichtschrankenelementen, die sich in engem Raster über die Höhe des Meßkanals erstrecken. Diese Anordnung dient der Konturprüfung. Der Prüfling durchläuft die Reihe der Lichtschrankenelemente, wobei diese in Abhängigkeit von der Geometrie und der Geschwindigkeit (ermittelt aus der Zeitmessung zwischen den Lichtschranken 9 und 10) unterschiedlich bedämpft werden. Das Muster der Bedämpfung wird über die Datenverarbeitungseinrichtung mit den hinterlegten Sollwerten verglichen.

Im übrigen läßt die Reihe 11 von Lichtschrankenelementen auch eine Aussage über die Dicke der Prüflinge 3 zu. Aus Figur 4 wird deutlich, daß die Dicke der Prüflinge 3 deren Position auf der Höhe der Seitenwand 5 des Meßkanals 2 bestimmt. Entsprechend ändert sich das Datenraster, das von den Lichtschrankenelementen der Reihe 11 geliefert wird.

In der Seitenwand 5 des Meßkanals 2 ist ferner eine Reihe von Spulen 12 vorgesehen, denen jeweils zugehörige Schwingkreise zugeordnet sind. Die Prüflinge 3 werden in definiertem Abstand an diesen Spulen 12 entlanggeführt, wobei sie deren Induktivität beeinflussen. Dies wiederum führt zu einer Verstellung der Resonanzfrequenz der zugehörigen Schwingkreise. Die Frequenzänderungen lassen sich ohne weiteres messen und stehen somit in Korrelation zum jeweiligen Reibmaterial. Ein Vergleich mit zugehörigen Sollwerten gibt Aufschluß über etwaige Abweichungen.

Die Vielzahl von Spulen 12 läßt nicht nur eine Identifikation des Reibmaterials zu, sondern gibt auch Aufschluß über dessen Verteilung über der Fläche des Reibbelags. So läßt sich für jeden Prüfling 3 ein zugeordneter "Fingerabdruck" erstellen.

An den Meßkanal 2 schließt sich eine Umlenkfläche 13 an, der ein Sensor 14 zum Erfassen des Aufprallimpulses zugeordnet ist. Der Aufprallimpuls in Verbindung mit der bekannten Rutschgeschwindigkeit gibt Aufschluß über die Masse des jeweiligen Prüflings 3. Abweichungen vom vorgegebenen Sollwert zeigen an, daß vorausgegangene Arbeitsschritte, wie Schleifen oder Scorchen, nicht korrekt abgelaufen sind. Eine weitere Einsatzmöglichkeit dieser Anordnung besteht darin, die Belagträgerplatte alleine auf Korrektheit zu testen.

In der Seitenwand 5 des Meßkanals 2 ist ferner ein Temperatursensor 15 angeordnet. Er gibt Aufschluß über die Temperatur des jeweiligen Prüflings 3. Die Temperatur zeigt an, ob der vorausgegangene Verfahrensschritt ordnungsgemäß abgelaufen ist. Ein nicht dargestellter Außentemperatursensor dient dazu, die Temperatureinflüsse der Umweltbedingen zu kompensieren.

Der Meßkanal 2 ist aus einem verschleiß- und temperaturfesten Material gefertigt. In Frage kommen vor allen Dingen keramische Werkstoffe, allerdings auch andere Werkstoffe, so lange sie die induktiven Sensoren der Schwingkreise nicht beeinflussen.

Die Lichtschrankenelemente sind in die jeweilige Seitenwand eingelassen und können mit einem Schutzglas oder einer Schutzfolie gegen mechanische Beschädigungen geschützt werden. Verschmutzungen können von der Steuerung der Lichtschranken erkannt und kompensiert werden. Außerdem können Reinigungseinrichtungen vorgesehen werden. Schließlich besteht die Möglichkeit, daß die Prüfeinrichtung ein Signal abgibt, sofern die Lichtschranken Gefahr laufen, durch Verschmutzung endgültig zu versagen.

An die Gestaltung des Aufprallpunktes, an welchem der Aufprallimpuls erfaßt wird, sind besondere Anforderungen zu stellen. Zum einen ist ein hohes Maß an Verschleißfestigkeit erforderlich, zum anderen dürfen die Prüflinge nicht beschädigt werden. Die Prüflinge verlassen die Prüfeinrichtung in einer Orientierung, die an die nachfolgenden Verarbeitungsschritte angepaßt ist.

Die Prüfeinrichtung nach dem Ausführungsbeispiel ist als Prüfmodul ausgebildet und weist eingangs- wie ausgangsseitig entsprechende (nicht dargestellte) Standardschnittetellen auf.

Erwähnt sei noch, daß das Prüfmodul ohne eigene Antriebseinheit funktionsfähig ist. Es bedarf keiner speziellen Sensorik, sondern arbeitet mit Standardsensoren. Bei vollautomatischen, verketteten Produktionsprozessen ist neben deren Überwachung auch ein direkter Eingriff in die Prozeßsteuerung möglich. In Schadensfällen kann das Prüfmodul zur schnellen Belagidentifikation eingesetzt werden. Auch vermag es Originale von Plagiaten zu unterscheiden.

## Patentansprüche

1. Prüfeinrichtung für Brems- und Kupplungsbeläge, die einen Reibbelag aufweisen, der vorzugsweise auf einer Trägerplatte angeordnet ist, ggf. unter Zwischenschaltung einer Zwischenschicht, aufweist
- sie einen für den Durchgang der Prüflinge (3) vorgesehenen Meßkanal (2) umfaßt, der gegenüber der Horizontalen geneigt ist und mindestens eine Seitenwand (5) sowie einen Boden (7) aufweist, wobei die vorzugsweise plan ausgebildete Seitenwand (5) gegenüber der Vertikalen geneigt ist,
- der Meßkanal (2) eine Sensoreinrichtung (9-15) **dadurch gekennzeichnet, daß**, die auf mindestens einen der folgenden Meßwerte des jeweiligen Prüflings (3) anspricht:
- Reibwert
- Geometrie
- Reibmaterial
- Masse
- Temperatur
- sie eine Datenverarbeitungseinrichtung umfaßt, die die von der Sensoreinrichtung (9-15) gelieferten Daten verarbeitet und mit vorgegebenen Sollwerten vergleicht.

2. Prüfeinrichtung nach Anspruch 1, **dadurch gekennzeichnet, daß** der Meßkanal (2) um einen Winkel von ca. 10° bis 30°, vorzugsweise von ca. 20° gegenüber der Horizontalen geneigt ist.

3. Prüfeinrichtung nach Anspruch 1 oder 2, **dadurch gekennzeichnet, daß** der Neigungswinkel des Meßkanals (2) einstellbar ist.

4. Prüfeinrichtung nach einem der Ansprüche 1 bis 3, **dadurch gekennzeichnet, daß** die Seitenwand (5) des Meßkanals (2) um einen Winkel von ca. 60° gegenüber der Horizontalen geneigt ist.

5. Prüfeinrichtung nach einem der Ansprüche 1 bis 4, **dadurch gekennzeichnet, daß** der Meßkanal (2) eine Vorlaufstrecke aufweist, die die Reibfläche des jeweiligen Prüflings (3) auf die gegenüber der Vertikalen geneigte Seitenwand (5) des Meßkanals (2) überleitet.

6. Prüfeinrichtung nach einem der Ansprüche 1 bis 5, **dadurch gekennzeichnet, daß** der Meßkanal (2) mindestens zwei in Kanalrichtung im Abstand zueinander angeordnete Lichtschranken (9, 10) zur Erfassung der Rutschzeit und damit der Rutschgeschwindigkeit des jeweiligen Prüflings (3) aufweist.

7. Prüfeinrichtung nach einem der Ansprüche 1 bis 6, **dadurch gekennzeichnet, daß** mindestens eine sich vom Boden (7) des Meßkanals (2) aus über mindestens einen Höhenabschnitt von dessen Seitenwänden (5,6) erstreckende Reihe (11) von Lichtschrankenelementen vorgesehen ist, wobei diese Lichtschrankenelemente in einem engen Raster angeordnet sind.

8. Prüfeinrichtung nach einem der Ansprüche 1 bis 7, **dadurch gekennzeichnet, daß** in die gegenüber der Vertikalen geneigte Seitenwand (5) des Meßkanals (2) mindestens eine Spule (12) eines zugehörigen Schwingkreises integriert ist.

9. Prüfeinrichtung nach einem der Ansprüche 1 bis 8, **dadurch gekennzeichnet, daß** der Meßkanal (2) in eine Umlenkfläche (13) übergeht und daß an der Übergangsstelle ein Sensor (14) zum Erfassen des Aufprallimpulses vorgesehen ist.

10. Prüfeinrichtung nach einem der Ansprüche 1 bis 9, **dadurch gekennzeichnet, daß** in die gegenüber der Vertikalengeneigte Seitenwand (5) des Meßkanals ein Temperatursensor (15) integriert ist.

11. Prüfeinrichtung nach einem der Ansprüche 1 bis 10, **dadurch gekennzeichnet, daß** sie durch Vermessung von Gutteilen die Sollwerte erzeugt und diese der Datenverarbeitungseinrichtung zur Speicherung zuführt.

## Claims

1. Testing device for brake and clutch linings which have a friction lining which is preferably disposed on a supporting plate, optionally with an intermediate layer interposed, **characterised in that** it comprises a measuring channel (2) which is provided for the testpieces (3) to pass through, is inclined with respect to the horizontal and has at least one side wall (5) as well as a base (7), wherein the side wall (5) which is preferably of planar construction is inclined with respect to the vertical, that the measuring channel (2) has a sensor means (9 - 15) which responds to at least one of the following measurement values of the respective testpiece (3):
- coefficient of friction
- geometry
- friction material
- mass
- temperature
and that it comprises a data processing system which processes data supplied by the sensor means (9 - 15) and compares them with predetermined desired values.

2. Testing device as claimed in Claim 1, **characterised in that** the measuring channel (2) is inclined by an angle of approximately 10° to 30°, preferably approximately 20° with respect to the horizontal.

3. Testing device as claimed in Claim 1 or 2, **characterised in that** the angle of inclination of the measuring channel (2) is adjustable.

4. Testing device as claimed in any one of Claims 1 to 3, **characterised in that** the side wall (5) of the measuring channel (2) is inclined by an angle of approximately 60° with respect to the horizontal.

5. Testing device as claimed in any one of Claims 1 to 4, **characterised in that** the measuring channel (2) has a lead section which leads the friction surface of the respective testpiece (3) onto the side wall (5) of the measuring channel (2) which is inclined with respect to the vertical.

6. Testing device as claimed in any one of Claims 1 to 5, **characterised in that** the measuring channel (2) has at least two light barriers (9, 10) disposed spaced from one another in the direction of the channel for detecting the slipping time and thus the slipping speed of the respective testpiece (3).

7. Testing device as claimed in any one of Claims 1 to 6, **characterised in that** at least one row (11) of light barrier elements is provided extending from the base (7) of the measuring channel (2) over at least a portion of the height of the side walls (5, 6) thereof, wherein these light barrier elements are disposed in a close grid.

8. Testing device as claimed in any one of Claims 1 to 7, **characterised in that** at least one coil (12) of an appertaining resonant circuit is integrated into the side wall (5) of the measuring channel (2) which is inclined with respect to the vertical.

9. Testing device as claimed in any one of Claims 1 to 8, **characterised in that** the measuring channel (2) merges into a deflector surface (13) and that a sensor (14) for detecting the impact momentum is provided at the transition point.

10. Testing device as claimed in any one of Claims 1 to 9, **characterised in that** a temperature sensor (15) is integrated into the side wall (5) of the measuring channel which is inclined with respect to the vertical.

11. Testing device as claimed in any one of Claims 1 to 10, **characterised in that** it generates the desired values by measurement of good parts and supplies these to the data processing system for storage.

## Revendications

1. Dispositif de contrôle pour garnitures de frein et d'embrayage qui présentent une garniture de friction disposée de préférence sur une plaque support, le cas échéant avec intercalage d'une couche intermédiaire, **caractérisé en ce qu'**
- il comporte un canal de mesure (2) prévu pour le passage des éprouvettes (3), qui est incliné par rapport à l'horizontale et comporte au moins une paroi latérale (5) ainsi qu'un fond (7), la paroi latérale (5), de préférence plane, étant inclinée par rapport à la verticale,
- le canal de mesure (2) présente un capteur (9-15) qui réagit à au moins l'une des valeurs mesurées suivantes de l'éprouvette (3) concernée :
- coefficient de frottement
- géométrie
- matériau de friction
- masse
- température
- il comporte un dispositif de traitement de données qui traite les données fournies par le capteur (9-15) et les compare à des valeurs de consigne prédéfinies.

2. Dispositif selon la revendication 1, **caractérisé en ce que** le canal de mesure (2) est incliné d'un angle d'environ 10° à 30°, de préférence d'environ 20° par rapport à l'horizontale.

3. Dispositif de contrôle selon la revendication 1 ou 2, **caractérisé en ce que** l'angle d'inclinaison du canal de mesure (2) est ajustable.

4. Dispositif de contrôle selon l'une quelconque des revendications 1 à 3, **caractérisé en ce que** la paroi latérale (5) du canal de mesure (2) est inclinée d'un angle d'environ 60° par rapport à l'horizontale.

5. Dispositif de contrôle selon l'une quelconque des revendications 1 à 4, **caractérisé en ce que** le canal de mesure (2) présente une chasse négative qui transmet la surface de friction de l'éprouvette (3) concernée à la paroi latérale (5) du canal de mesure (2) inclinée par rapport à la verticale.

6. Dispositif de contrôle selon l'une quelconque des revendications 1 à 5, **caractérisé en ce que** le canal de mesure (2) présente au moins deux barrières photoélectriques (9, 10), disposées à distance l'une de l'autre dans le sens du canal, pour détecter le temps de glissement et donc la vitesse de glissement de l'éprouvette (3) concernée.

7. Dispositif de contrôle selon l'une quelconque des revendications 1 à 6, **caractérisé en ce qu'**il est prévu au moins une rangée (11) d'éléments de barrière photoélectrique, s'étendant du fond (7) du canal de mesure (2) sur au moins un tronçon de hauteur des parois latérales (5, 6) de celui-ci, ces éléments de barrière photoélectrique étant disposés dans un quadrillage serré.

8. Dispositif de contrôle selon l'une quelconque des revendications 1 à 7, **caractérisé en ce qu'**au moins une bobine (12) d'un circuit oscillant correspondant est intégrée dans la paroi latérale (5) du canal de mesure (2) inclinée par rapport à la verticale.

9. Dispositif de contrôle selon l'une quelconque des revendications 1 à 8, **caractérisé en ce que** le canal de mesure (2) se termine par une face de renvoi (13) et **en ce qu'**il est prévu, à l'endroit de la transition, un capteur (14) pour détecter l'impulsion d'impact.

10. Dispositif de contrôle selon l'une quelconque des revendications 1 à 9, **caractérisé en ce qu'**un capteur thermique (15) est intégré dans la paroi latérale (5) du canal de mesure inclinée par rapport à la verticale.

11. Dispositif de contrôle selon l'une quelconque des revendications 1 à 10, **caractérisé en ce qu'**il produit les valeurs de consigne par mesurage de pièces conformes et transporte ces données au dispositif de traitement de données pour les sauvegarder.
